# EUROPEAN PATENT SPECIFICATION

(11) **EP 2 064 100 B1**
(45) Date of publication and mention of the grant of the patent: **24.07.2013**
(21) Application number: 07828476.7
(22) Date of filing: 19.09.2007
(51) Int. Cl.: B60T 13/04, F16D 65/28

(54) **BRAKE CYLINDER DEVICE AND UNIT BRAKE USING THE SAME**
BREMSZYLINDERVORRICHTUNG UND DIESE VERWENDENDE BREMSEINHEIT
CYLINDRE DE FREIN ET FREIN UNITAIRE L'UTILISANT

(30) Priority: 22.09.2006 JP 2006256975; 12.04.2007 JP 2007105228
(43) Date of publication of application: 03.06.2009
(73) Proprietor: Nabtesco Corporation, Tokyo 105-0022 (JP)
(72) Inventor: ASANO, Yoshio, Kobe-shi, Hyogo 651-2271 (JP)
(74) Representative: Cardy, Sophie Marie
(86) International application number: PCT/JP2007/068730
(87) International publication number: WO 2008/035802

(56) References cited:
- JP-A- 55 160 646
- JP-A- 63 125 834
- JP-A- 2001 206 213
- JP-Y2- 08 005 881
- US-A1- 2003 196 859

## Description

### Technical Field

The present invention relates to a brake cylinder device capable of actuating both a normal brake used as a service brake and a spring brake used as a parking brake.

### Background Art

For example, in a brake system for railway vehicles, known is a brake cylinder device capable of actuating both a normal brake which is used in a normal operation and actuated by pressure air and a spring brake which is used in a prolonged parking and actuated by a spring force even in the absence of pressure air (refer to, for example, Patent Document 1: the Japanese Patent Application Laid Open No.63-125834). In the brake cylinder device described in Patent Document 1 (Fig. 2), when the normal brake is used which is composed of a first cylinder chamber 1, a first piston 6, a first spring 7 and a first push rod 8, pressure air is supplied to the first cylinder chamber 1 from a first air source 2, thereby generating a braking force. Therefore, when the spring brake is used which is composed of a second cylinder chamber 9, a second piston 14, and a second spring 15, pressure air is supplied to the second cylinder chamber 9 via a double check valve 12 from a second air source 10 different from the first air source. Then, the pressure air from the first air source 2 is supplied to the first cylinder chamber 1 and also supplied to the second cylinder chamber 9 via the double check valve 12. Thereby, it is possible to prevent an excessive braking actuation due to a simultaneous operation of the spring brake while the normal brake is in operation.

However, in the brake cylinder device described in Patent Document 1 (Fig. 2), there is a problem that the double check valve is placed into piping, by which the piping is complicatedly increases the possibility of malfunction and deteriorates the reliability of brakes. As a brake cylinder device made with a view toward solving this problem, such a device is described in Patent Document 1 (in Fig. 1 and others) that is provided with a normal brake having a first piston 22 and a first spring 25 on the front side of the first piston 22, a spring brake having a second piston 23 and a second spring 26 at the back thereof, a cylinder chamber 24 formed between the first piston 22 and the second piston 23 and having a pressure-air supply/discharge hole 45, and an engagement/disengagement means 27 capable of retaining and releasing the second piston 23 at a retracted position against the action force of the second spring 26.
Document US 20030196859 discloses a brake cylinder device according to the preamble of claim 1.

### Disclosure of the Invention

However, the brake cylinder device described in Patent Document 1 requires the engagement/disengagement means 27 capable of retaining and releasing the second piston 23 of the spring brake at the retracted position against the action force of the second spring 26. Therefore, in order to realize the engagement/disengagement means 27,required are various mechanisms such as a sleeve 46, a ball 47, a cylindrical body 48, a third spring 49, a lid body 50 and a locked portion 44 installed on the second piston 23. Thus, a problem is posed that although a double check valve can be omitted, an engagement/disengagement means made up of a complicated mechanism is required, by which the brake cylinder device is complicated in constitution to result in an increased cost.

The present invention has been made in view of the above situation, relating to a brake cylinder device capable of actuating both a normal brake and a spring brake used as a parking brake, an object of which is to provide a brake cylinder device which can omit a double check valve often resulting in a complicated piping, a greater number of components or an increased maintenance load and also realize the prevention of a simultaneous operation of the normal brake and the spring brake by using a simple mechanism. The present invention also provides a unit brake using the above-described brake cylinder device.

The present invention relates to a brake cylinder device and a unit brake using the brake cylinder device. Therefore, the brake cylinder device of the present invention and the unit brake using the same have the following features for attaining the above described object. In other words, the brake cylinder device of the present invention and the unit brake using the same have the following features solely or in an appropriate combination of them.

A first feature of the brake cylinder device of the present invention for attaining the above-described object is that
the brake cylinder device comprising: a service brake having a first piston, a rod projecting from the first piston, a first pressure chamber and a first spring, the first piston being subjected to the action of the first pressure chamber and the first spring sandwiching the first piston therebetween, thereby moving the first piston in a braking direction against an urging force of the first spring when a supply of pressure fluid to the first pressure chamber is started, a braking force being generated with the movement of the first piston in the braking direction; a spring brake having a second piston installed so as to move in an axial direction of the rod and penetrated by the rod, a second pressure chamber and a second spring, the second piston being subjected to the action of the second pressure chamber and the second spring sandwiching the second piston therebetween, threby moving the second piston in the braking direction against an urging force of the second spring when a supply of pressure fluid to the second pressure chamber is stopped and a discharge of pressure fluid from the second pressure chamber is started; and characterised in that a third pressure chamber arranged ,separated from the second pressure chamber, on the opposite side of the second spring relative to the second piston, the second piston being subjected to the action of the third pressure chamber, threby moving the second piston in an anti-braking direction, that is a direction reverse to the braking direction, against an urging force of the second spring when pressure fluid supplied to the first pressure chamber is supplied to the third pressure chamber.

According to the above constitution, the pressure fluid to be supplied to the first pressure chamber is supplied to the third pressure chamber, by which the third pressure chamber allowing the second piston to be move in the anti-braking direction against an urging force of the second spring so as to act on the second piston as a pressure chamber divided and sectioned from the second pressure chamber. Therefore, while the normal brake is in operation, the third pressure chamber acts to move the second piston in the anti-braking direction. It is, thereby, possible to prevent a simultaneous operation of the normal brake and the spring brake. Further, a simple mechanism of installing the third pressure chamber that is supplied pressure fluid from the first pressure chamber without a necessity for installing a double check valve which may often result in a complicated piping, a greater number of components or an increased maintenance load makes it possible to prevent a simultaneous operation of the normal brake and the spring brake.

As a result, the mechanism can be simplified to greatly reduce costs.

As described above, according to the constitution of the present invention, the brake cylinder device capable of actuating both a normal brake and a spring brake used in a parking brake can be assembled without a double check valve, and the simple mechanism is used to prevent a simultaneous operation of the normal brake and the spring brake.

Further, a second feature of the brake cylinder device of the present invention is that in which the second pressure chamber is arranged along the circumferential direction on the outer circumference of the second piston and the third pressure chamber is arranged along the circumferential direction on the inner circumference of the second piston.

According to this constitution, since the second pressure chamber and the third pressure chamber are arranged respectively on the outer circumference of the second piston and on the inner circumference thereof in the circumferential direction, the second piston can be uniformly urged in an axially symmetrical manner against an urging force of the second spring even upon an actuation of either the second pressure chamber or the third pressure chamber. Therefore, it is possible to realize a mechanism for uniformly urging the second piston by a simple constitution in which the second pressure chamber is arranged on the outer circumference and the third pressure chamber is arranged on the inner circumference. In addition, it is not necessary to install an additional mechanism for uniformly urging the second piston, thus making the mechanism simple to reduce costs.

Further, a third feature of the brake cylinder device of the present invention is that in which the second piston is provided with a cylindrical wall disposed along the circumferential direction of the second piston and projected in the braking direction to be formed into a cylindrical shape, thereby sectioning the second pressure chamber and the third pressure chamber, and the cylindrical wall is slidingly in contact with an inner cylindrical portion formed in a tubular shape along the circumferential direction of the second piston inside a cylinder main body including the normal brake and the spring brake.

According to this constitution, a simple mechanism is provided in which the cylindrical wall slidingly in contact with the inner cylindrical portion formed inside the cylinder main body is installed on the second piston to section the second pressure chamber and the third pressure chamber making it possible to easily realize a constitution in which the second pressure chamber is arranged on the outer circumference and the third pressure chamber is arranged on the inner circumference

Further, a fourth feature of the brake cylinder device of the present invention is that in which a covering is formed on the same side as the second spring relative to the second piston to enclose an end of the rod penetrating through the second piston, the end being arranged on the same side as the second spring relative to the second piston.

According to this constitution, since the covering formed so as to enclose and cover the end of the rod penetrating through the second piston is installed, it is possible to effectively prevent leakage of a pressure fluid by a simple constitution of providing the covering even in a constitution wherein the rod penetrates through the second piston. Further, it is not necessary to provide a seal mechanism of a special specification for sealing a clearance between the second piston and the rod, thus making it possible to simplify the mechanism and reduce costs.

Further, a fifth feature of the brake cylinder device of the present invention is that which is provided with a communication path for connecting communicatively the first pressure chamber with the third pressure chamber, wherein pressure fluid supplied to the first pressure chamber is supplied to the third pressure chamber through the communication path.

According to this constitution, it is possible to easily supply to the third pressure chamber the pressure fluid to be supplied to the first pressure chamber by a simple constitution of providing the communication path which communicatively connects the first pressure chamber with the third pressure chamber.

Further, a sixth feature of the brake cylinder device of the present invention is that which is additionally provided with a clutch mechanism in which a supply of pressure fluid to the second pressure chamber is stopped and a discharge of pressure fluid from the second pressure chamber is started, thereby giving a connection state for connecting the rod with the second piston when the second piston starts to move with respect to the rod by an urging force of the second spring, and giving a non-connection state for releasing the connection of the rod with the second piston in a state that pressure fluid is supplied to the second pressure chamber,wherein the communication path is formed at the clutch mechanism which is in the non-connection state.

According to this constitution, it is possible to apply the brakes to a rod via a second piston by installing a clutch mechanism which connects the rod with the second piston when pressure fluid is discharged from the second pressure chamber and the second piston starts to move with respect to the rod. Then, a clearance formed in the non-connection state of the clutch mechanism is used, by which the thus formed clearance is allowed to function also as the communication path to supply to the third pressure chamber the pressure fluid to be supplied to the first pressure chamber.

Further, a first feature of the unit brake of the present invention is that in which a unit brake is to brake the rotation of a wheel by allowing a brake shoe to be in contact with the wheel of a vehicle or, specifically, the unit brake is provided with a brake cylinder device arranged in such a manner that the braking direction, which is a direction in which the first piston moves, is parallel with the shaft direction of the wheel and having at least any one of the first feature to the sixth feature, an adjustor installed so as to advance and retract freely in a direction perpendicular to the braking direction inside a brake main body and having a supporting shaft extended perpendicularly in the advancing and retracting direction and the braking direction, a roller installed on the supporting shaft so as to rotate freely, a push rod installed on the adjustor in which the brake shoe is connected to the end portion extended from the brake main body in the advancing direction of the adjustor; and a wedge firmly fixed to the rod, wherein the wedge has an inclined acting surface that is inclined in the braking direction and capable of urging the roller in the advancing direction when the wedge is moved in the braking direction.

According to this constitution, the first piston is moved in the braking direction, by which the wedge firmly fixed to the rod is also moved in the same direction. In this instance, the inclined acting surface of the wedge is in contact with a roller, urging the roller in the advancing direction. Thereby, since the adjustor on which the roller is installed is moved in the advancing direction together with the roller, the push rod attached to the adjustor is also moved in the advancing direction. Then, the brake shoe installed on the leading end of the push rod is in contact with a wheel to generate a friction, thereby the rotation of the wheel is braked.

Since the brake cylinder device is arranged so that the first piston moves in a direction parallel with the shaft of the wheel, it is possible to effectively utilize a space of the wheel in the shaft direction and also make the space small which is necessary for installing the unit brake in the height direction of the vehicle.

Further, since the inclined acting surface of the wedge is used to urge the roller, it is possible to adjust a force pushing the brake shoe to the wheel by adjusting an angle of the inclined acting surface with respect to a direction in which the first piston moves. For example, where the angle is made smaller than 45°, the stroke of the adjustor is smaller than that of the first piston, thus making it possible to increase an urging force of the brake cylinder device and convert the force into a force pushing the brake shoe to the wheel.

Further, a second feature of the unit brake of the present invention is that which is additionally provided with a spherical bearing for providing support so that the push rod can swing with respect to the adjustor.

According to this constitution, the brake shoe installed on/at the leading end of the push rod is allowed to move in a direction other than the advancing and retracting direction of the adjustor. Thereby, it is possible to give a greater degree of freedom to the movement of the brake shoe and also constitute the brake unit in such a manner that the brake shoe can be in contact with a wheel more stably on application of the brakes.

Further, a third feature of the unit brake of the present invention is that in which the unit brake has the first feature or the second feature in which a male thread is made on the outer circumferential face of the push rod and a female thread screwed with the male thread is made on the inner circumferential face, a cylindrical sheath rod screwed and installed on the push rod is additionally provided, the sheath rod is installed on the adjustor in such a manner as to be restricted for a relative movement toward the adjustor in the advancing and retracting direction and also so as to make a relative movement around the cylindrical central axis of the adjustor, and a rotating means for rotating the sheath rod from outside the brake main body is installed on the end portion of the sheath rod in the retracting direction of the adjustor.

According to this constitution, the sheath rod moves in an advancing and retracting manner in association with the movement of the adjustor, by which the push rod screwed and installed inside the sheath rod is allowed to move toward the wheel in an advancing and retracting manner. Further, since the rotating means is installed on the end portion of the sheath rod, the push rod screwed and installed inside the sheath rod is allowed to move toward the sheath rod in an advancing and retracting manner by giving a rotational force to the rotating means from outside to rotate the sheath rod. Thereby, it is possible to easily adjust a clearance between the brake shoe installed on the leading end of the push rod and the wheel.

Further, a fourth feature of the unit brake of the present invention is that in which the unit brake has at least any one of the first feature to the third feature, or specifically, it is additionally provided with a ventilation hole formed on the brake main body so as to communicatively connect the inside with the outside of the brake main body in which a female thread is made on the inner circumferential face, a ventilation tube formed with a cylindrical elastic member and having at the end portion a connection portion at which a male thread screwed with the female thread of the ventilation hole is made and a filter fitted inside the connection portion and made with a material higher in rigidity than the connection portion.

According to this constitution, since the connection portion is formed with an elastic member, it is possible to easily fit a filter into the inner circumferential face of the connection portion and fix the filter. Thereby, a special member for attaching the filter can be made unnecessary. Further, the connection portion is adjusted for the diameter in such a manner that a force to reduce the diameter of the connection portion is applied from the inner circumferential face of the ventilation hole when the connection portion is screwed into the ventilation hole in a state that the filter is fitted into the inner circumference face of the connection portion, thereby making it possible to join the filter with the connection portion more strongly.

### Brief Description of the Drawings

Fig. 1 is a sectional view of a brake cylinder device related to Embodiment 1 of the present invention.
Fig. 2 is a sectional view for explaining the actuation of the brake cylinder device given in Fig. 1.
Fig. 3 is a sectional view for explaining the actuation of the brake cylinder device given in Fig. 1.
Fig. 4 is a sectional view for explaining the actuation of the brake cylinder device given in Fig. 1.
Fig. 5 is a partial sectional view of a unit brake related to Embodiment 2.
Fig. 6 is a partial cross-sectional sagittal view taken along S1 to S1 of the unit brake given in Fig. 5.
Fig. 7 is a partial cross-sectional sagittal view taken along S3 to S3 of the unit brake given in Fig. 6.
Fig. 8 is a partial cross-sectional sagittal view taken along S2 to S2 of the unit brake given in Fig. 5.
Fig. 9 is a sectional view taken along S4 to S4 in the vicinity of an adjustable nut given in Fig. 8.
Fig. 10 is an enlarged sectional view of a connection portion of the ventilation tube given in Fig. 5.
Fig. 11 is a plan view of a filter of the ventilation tube.
Fig. 12 is a sectional view taken along S5 to S5 of the filter given in Fig. 11.

### Best Mode for Carrying Out the Invention

Hereinafter, a description will be given for the best mode for carrying out the present invention by referring to the drawings.

### (Embodiment 1)

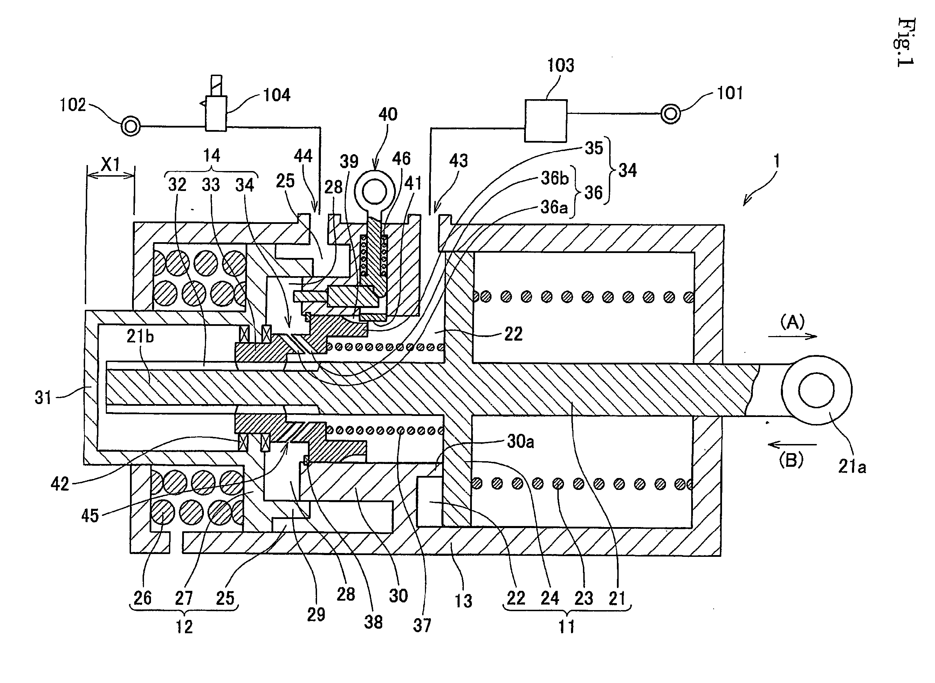

Fig. 1 is a sectional view of a brake cylinder device 1 of Embodiment 1 in the present invention. The brake cylinder device 1 shown in Fig. 1 is provided with a normal brake 11 actuated by pressure fluid such as compressed air and a spring brake 12 actuated by an urging force of a spring and composed as a brake cylinder device capable of actuating both the normal brake 11 and the spring brake 12. Therefore, the brake cylinder device 1 can be used, for example, as a brake cylinder device for railway vehicles. However, it is not limited thereto and may be used in various applications.

As shown in Fig. 1, the brake cylinder device 1 is composed of a cylinder main body 13, a normal brake 11 and a spring brake 12 included in the cylinder main body 13, a third pressure chamber 28 different from the first pressure chamber 22 installed on the normal brake 11 and different from the second pressure chamber 25 installed on the spring brake 12, and a clutch mechanism 14.

The cylinder main body 13 is formed in a cylindrical shape and provided with a first port 43 connected to a first air supply source 101 and a second port 44 connected to a second air supply source 102. Compressed air (pressure fluid) supplied from the first air supply source is supplied to the first port 43 via a normal brake control device 103 actuating on the basis of a controller's command (not shown). Then, the compressed air supplied to the cylinder main body 13 from the first port 43 is discharged via the normal brake control device 103 on the basis of a controller's command. Further, the compressed air (pressure fluid) supplied from the second air supply source is supplied to the second port 44 via a spring brake control solenoid valve 104 actuated by being switched to a magnetized state and/or a demagnetized state on the basis of a controller's command. Then, the compressed air supplied to the cylinder main body 13 from the second port 44 is discharged via the spring brake control solenoid valve 104 on the basis of a controller's command.

The normal brake 11 is composed of a rod 21, a first pressure chamber 22, a first spring 23 and a first piston 24. The rod 21 is formed so as to project from the first piston 24 disposed inside a cylinder main body 13. The leading end 21a of the rod 21 is disposed so as to project from the cylinder main body 13, and connected, for example, to a brake shoe (not shown) which generates a braking force resulting from a friction force to reduce the rotation of a wheel by being pressed against the tread in contact with a rail on the wheels of a carriage of a railway vehicle. Then, the leading end 21a of the rod 21 moves in a direction projected from the cylinder main body 13 (the direction indicated by the arrow (A) in the drawing), by which a brake shoe is urged to actuate the brake. The first pressure chamber 22 is connected to the first port 43 and formed by being sectioned by the first piston 24 inside the cylinder main body 13. The first spring 23 is disposed at an area sectioned by the first piston 24 on one end inside the cylinder main body 13 and arranged so as to oppose the first pressure chamber 22 via the first piston 24. The first piston 24 is disposed so as to reciprocate freely inside the cylinder main body 13 (sliding freely on the inner wall of the cylinder main body 13), moving against an urging force resulting from the elastic recovery of the compressed first spring 23 by the compressed air supplied to the first pressure chamber 22 from the first port 43. Therefore, the normal brake 11 is provided with the first piston 24 in which the first pressure chamber 22 and the first spring 23 act so as to oppose each other, with the rod 21 projecting, wherein compressed air is supplied to the first pressure chamber 22, thereby the first piston 24 moves in a braking direction (the direction indicated by the arrow (A) in the drawing) against an urging force of the first spring 23.

The spring brake 12 is composed of a second pressure chamber 25, a second spring 26 and a second piston 27. The second pressure chamber 25 is communicatively connected to a second port 44 and formed inside the cylinder main body 13 by being divided by the second piston 27. The second spring 26 is disposed at an area divided by the second piston 27 on the other end inside the cylinder main body 13 and arranged so as to oppose the second pressure chamber 25 via the second piston 27. The second piston 27 is disposed so as to reciprocate freely inside the cylinder main body 13 (sliding freely on the inner wall of the cylinder main body 13), provided so as to move in a direction axially of the rod 21 and also formed in such a manner that the rod 21 penetrates therethrough. Then, compressed air is supplied to the second pressure chamber 25 from the second port 44, by which the second piston 27 moves in an anti-braking direction, specifically a direction reverse to the above-described braking direction against an urging force resulting from the elastic recovery of the compressed second spring 26. On the other hand, the compressed air supplied inside the second pressure chamber 25 is discharged through the second port 44, by which the second piston 27 moves in the braking direction by an urging force of the second spring 26. Since the spring brake 12 is provided with the second piston 27 in which the second pressure chamber 25 and the second spring 26 act so as to oppose each other, a state that the compressed air is supplied to the second pressure chamber 25 is shifted to a state that it is discharged, thus the second piston 27 moves in the braking direction by an urging force of the second spring 26.

The third pressure chamber 28 is arranged so as to oppose the second spring 26 via the second piston 27 and also arranged so as to act as a pressure chamber divided and sectioned from the second pressure chamber 25 with respect to the second piston 27. Then, compressed air supplied to the first pressure chamber 22 is supplied to the third pressure chamber 28 via a communication path 45 formed at a clutch mechanism 14 to be described later, thereby the second piston 27 moves in the above-described braking direction against an urging force of the second spring 26. Further, a cylindrical wall 29 formed in a cylindrical shape, which is disposed along the circumferential direction and projected in the braking direction, is installed on the second piston 27. Therefore, the cylindrical wall 29 is slidingly in contact with an inner cylindrical portion 30 formed in a cylindrical shape along the circumferential direction inside the cylinder main body 13, and the cylindrical wall 29 sections the second pressure chamber 25 and the third pressure chamber 28. Therefore, the second pressure chamber 25 is arranged along the circumferential direction on the outer circumference of the second piston 27, and the third pressure chamber 28 is arranged along the circumferential direction on the inner circumference of the second piston 27.

The clutch mechanism 14 is provided as a mechanism in which a state that compressed air is supplied to the second pressure chamber 25 is shifted to a state that it is discharged, thereby giving a connection state for connecting the rod 21 with the second piston 27 when the second piston 27 starts to move with respect to the rod 21 by an urging force of the second spring 26, and giving a non-connection state for releasing the connection of the rod 21 with the second piston 27 in a state that compressed air is supplied to the second pressure chamber 25.

The clutch mechanism 14 is composed of a screw 32, a nut member 33 and a rotation stopping means 34. The screw 32 is formed on the outer circumference of an end portion which is opposite the leading end 21a of the rod 21. The nut member 33 is arranged in meshing with the screw 32 and supported by the second piston 27 so as to rotate freely via a shaft bush 42. Thereby, the nut member 33 is screwed with the screw 32 and also rotated by a relative movement of the rod 21 and the second piston 27.

The rotation stopping means 34 is installed as means for stopping the rotation of the nut member 33 in contact with the nut member 33 when the second piston 27 starts to move relatively with respect to the rod 21, and is composed of a sleeve member 35 opposing the nut member 33 and a meshing means 36 installed on a part where the nut member 33 is opposed to the sleeve member 35. The sleeve member 35 is inserted axially along the inner cylindrical portion 30 so as to slide freely. Then, the sleeve member 35 is urged by a spring 37 toward a stopper ring 38. The sleeve member 35 is to be stopped for rotation in one direction by a lock lever 40. Specifically, a latch blade 39 extended axially is installed on the outer circumference of the sleeve member 35, and a blade edge 41 urged by a spring 46 toward the latch blade 39 is installed on the leading end of the lock lever 40. The latch blade 39 and the blade edge 41 act as a one-way clutch which prevents the rotation together with the rotation in association with the movement of the nut member 33 toward one side (braking direction) and permits the rotation together with the rotation of the nut member 33 toward the other side (anti-braking direction). It is noted that the blade edge 41 of the lock lever 40 is urged toward the latch blade 39 by the spring 46 and removed from the latch blade 39 against an urging force of the spring 46 when the lock lever 40 is pulled up. The latch blade 39 of the sleeve member 35 is extended axially and the blade edge 41 of the lock lever 40 is engaged with one side of the latch blade 39, by which the latch blade 39 can be continuously engaged with the blade edge 41, even if the sleeve member 35 slides toward one side.

In the rotation stopping means 34, the meshing means 36 is composed of a indented blade 36a formed on the end portion of the nut member 33 opposing the sleeve member 35 and an indented blade 36b formed on the end portion of the sleeve member 35 opposing the nut member 33. When the second piston 27 starts to move with respect to the rod 21, the indented blade 36a of the nut member 33 is meshed with the indented blade 36b of the sleeve member 35, and the nut member 33 is stopped for rotation to give a connection state for connecting the rod 21 with the second piston 27. On the other hand, in a state that compressed air is supplied to the second pressure chamber 25, the indented blade 36a of the nut member 33 is not meshed with the indented blade 36b of the sleeve member 35. Therefore, the nut member 33 is in a state of rotating freely to give a non-connection state for releasing the connection of the rod 21 with the second piston 27.

Further, when the clutch mechanism 14 is in the above-described non-connection state, a communication path 45 is to be formed, which communicatively connects the first pressure chamber 22 with the third pressure chamber 28. In other words, when the clutch mechanism 14 is in the non-connection state in which the indented blade 36a of the nut member 33 is not meshed with the indented blade 36b of the sleeve member 35, the communication path 45 is formed at a clearance between the indented blade 36a and the indented blade 36b. Then, compressed air supplied to the first pressure chamber 22 via the communication path 45 is to be supplied to the third pressure chamber 28.

Further, a covering 31 is installed in the brake cylinder device 1. The covering 31 is formed on the same side as the second spring 26 relative to the second piston 27 to enclose an end portion 21b of the rod 21 penetrating through the second piston 27.The end portion 21b is arranged on the same side as the second spring 26 relative to the second piston 27.Then, the covering 31 is formed into a cylindrical shape, for example, and disposed so as to pass through the inside of the second spring 26 and penetrate through a hole portion formed on the end portion of the cylinder main body 13, thereby projecting outside the cylinder main body 13. Since the covering 31 moves together with the second piston 27, it is possible to easily recognize visually an operation state of the second piston 27, specifically, a state that the spring brake 12 is in operation, from outside the cylinder main body 13.

Next, a description will be given for actuation of the brake cylinder device 1. Fig. 1 is a sectional view of the brake cylinder device 1 which is in a slackened state that neither of the normal brake 11 or the spring brake 12 operates. For example, when braking operation is not performed in driving a railway vehicle, the state will be as shown in Fig. 1. In this state, no compressed air is supplied to the first pressure chamber 22 from a first air supply source 101 via a normal brake control device 103 and a first port 43 on the basis of the control by the normal brake control device 103. Then, compressed air inside the first pressure chamber 22 is spontaneously discharged via the normal brake control device 103 and the first port 43. Therefore, inside the cylinder main body 13, the first piston 24 is urged by the first spring 23 in an anti-braking direction (the direction indicated by the arrow (B) in the drawing), and the first piston 24 is in contact with the end portion 30a of the inner cylindrical portion 30.

On the other hand, in the state shown in Fig. 1, compressed air is supplied to the second pressure chamber 25 from the second air supply source 102 via the spring brake control solenoid valve 104 and the second port 44 on the basis of the control by the spring brake control solenoid valve 104. Therefore, the second piston 27 is in a state that it has moved in an anti-braking direction (the direction indicated by the arrow (B) in the drawing) against an urging force of the second spring 26 due to an urging force resulting from the action of the compressed air supplied to the second pressure chamber 25. In this state, the indented blade 36a of the nut member 33 is not meshed with the indented blade 36b of the sleeve member 35 to give a clearance.

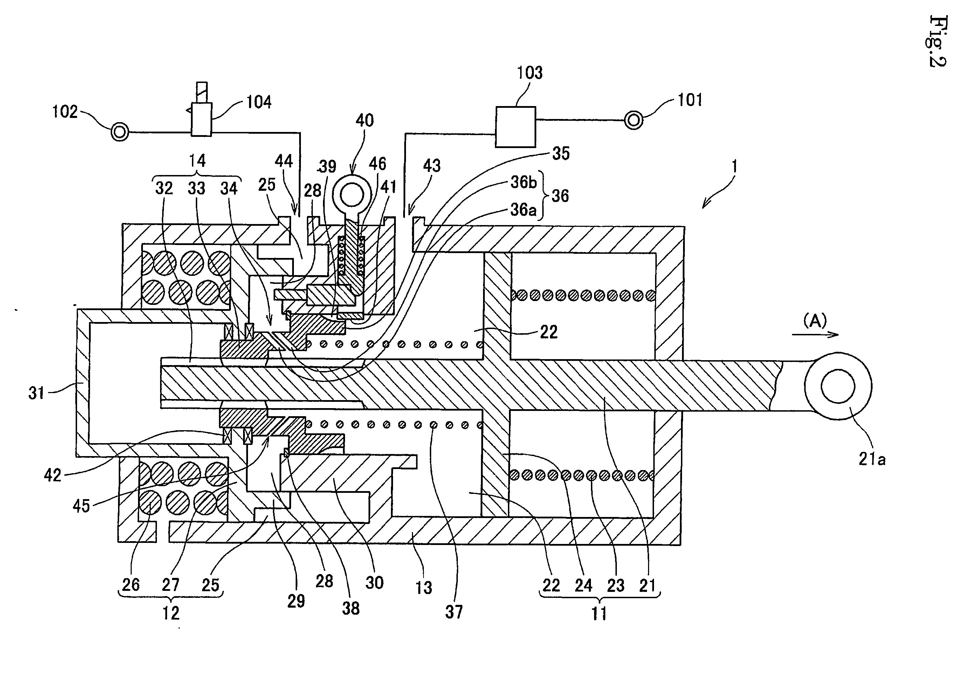

Fig. 2 is a sectional view of the brake cylinder device 1 showing a state that both the normal brake 11 and the spring brake 12 are in a slackened state shown in Fig. 1 shifted to a state that the normal brake 11 is actuated. Compressed air is supplied to the first pressure chamber 22 from the first air supply source 101 via the first port 43 on the basis of the control by the normal brake control device 103, by which the normal brake 11 is actuated. In this instance, as shown in Fig. 2, the first piston 24 moves in the braking direction (the direction indicated by the arrow (A) in the drawing) against an urging force of the first spring 23 due to an urging force resulting from the action of the compressed air supplied to the first pressure chamber 22. Thereby, the rod 21 is moved in the braking direction together with the first piston 24, and a brake shoe (not shown) connected to the leading end 21a thereof is pressed against the wheel tread, thereby generating a braking force. It is noted that a screw 32 installed on the rod 21 is screwed with the nut member 33, but when the rod 21 moves in the braking direction together with the first piston 24, the nut member 33 is supported by the shaft bush 42 so as to rotate freely with respect to the second piston 27. Therefore, the nut member 33 is rotated together with the movement of the rod 21 in the braking direction, while it is supported by the shaft bush 42, thus resulting in movement of the rod 21 alone in the braking direction.

Further, in the state as shown in Fig. 2, the indented blade 36a of the nut member 33 is not meshed with the indented blade 36b of the sleeve member 35 to form a clearance, which forms the communication path 45 formed by thus state. Therefore, compressed air supplied to the first pressure chamber 22 is to be supplied to the third pressure chamber 28 as well via the communication path 45. Thereby, even if there is developed a state that no compressed air is supplied to the second pressure chamber 25 from the second air supply source 102 while the normal brake is in operation due to malfunction of the spring brake control solenoid valve 104 or others, the compressed air to be supplied to the first pressure chamber 22 is to act on the third pressure chamber 28 via the communication path 45 with respect to the second piston 27. Therefore, such a state can be kept that the second piston 27 is urged and moved in the anti-braking direction against an urging force of the second spring 26 when the normal brake 11 is in operation. It is, thereby, possible to prevent an excessive braking actuation of both the normal brake force and the spring brake force resulting from a simultaneous operation of the normal brake 11 and the spring brake.

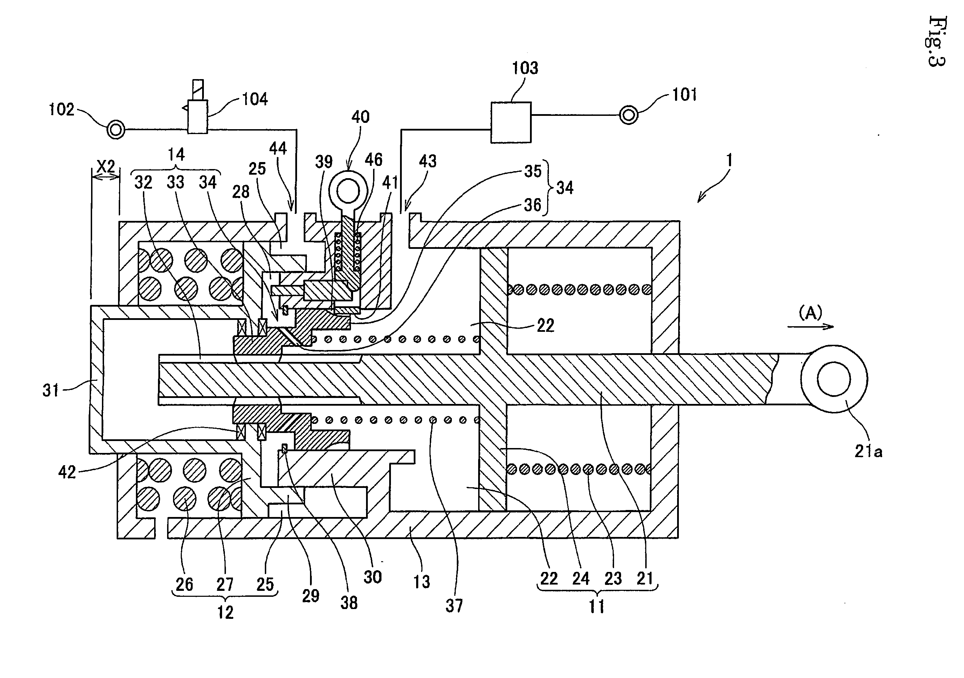

Fig. 3 is a sectional view of a spring brake cylinder 1 which shows a state that the spring brake 12 is actuated. Where the spring brake 12 is actuated, for example, the normal brake 11 is actuated (refer to Fig. 2) and used as a parking brake in a completely stopped state of a railway vehicle, thus resulting in actuation of the spring brake 12. The spring brake 12 is actuated by compressed air discharged from the second pressure chamber 25 via the second port 44 and the spring brake control solenoid valve 104 on the basis of the control of the spring brake control solenoid valve 104. It is noted that when the spring brake 12 is actuated, the compressed air from the first air supply source 101 is not supplied to the first pressure chamber 22 but the compressed air inside the first pressure chamber 22 is spontaneously discharged via the first port 43 and the normal brake control device 103.

When the compressed air supplied inside the second pressure chamber 25 is discharged via the second port 44 and the spring brake control solenoid valve 104, the second piston 27 starts to move in a braking direction (the direction indicated by the arrow (A) in the drawing) by an urging force of the second spring 26. In this instance, the nut member 33 is rotated around the screw 32 of the rod 21, by which the second piston 27 starts to move in the braking direction, together with the nut member 33, with respect to the rod 21. Then, as described above, when the second piston 27 starts to move with respect to the rod 21, the nut member 33 is in contact with the sleeve member 35. In other words, the meshing means 36 is in a state that the indented blade 36a of the nut member 33 is meshed with the indented blade 36b of the sleeve member 35. It is noted that in this instance, the communication path 45 (refer to Fig. 2) is closed. When the meshing means 36 is meshed therewith, the latch blade 39 of the sleeve member 35 is engaged with the blade edge 41 of the lock lever 40, thereby preventing the rotation together with the rotation in association with the movement of the sleeve member 35 in the braking direction. As a result, the rotation of the nut member 33 is stopped by the rotation stopping means 34. It is noted that when the meshing means 36 is meshed therewith, the nut member 33 and the sleeve member 35 make a slight movement in the braking direction together with the second piston 27 against an urging force of the spring 37 but the latch blade 39 of the sleeve member 35 is engaged with the blade edge 41 of the lock lever 40 deeply in an axial direction to result in a halt of the second piston 27, the nut member 33 and the sleeve member 35.

The meshing means 36 is meshed as described above, by which the clutch mechanism 14 is to move from a non-connection state to a connection state. Then, in the connection state shown in Fig. 3, since the rotation of the nut member 33 is stopped by the rotation stopping means 34, the second piston 27 urges the rod 21 via the nut member 33 by an urging force of the second spring 26 in a state that it has moved in the braking direction and consequently the rod 21 is kept moved in the braking direction. In other words, such a state is retained that the spring brake 12 is actuated to apply a spring brake force. It is noted that even if a reaction force resulting from the brake shoe (not shown) of the wheel tread acts on the rod 21 in an anti-braking direction, there is developed a state that screw threads are pressed against each other between the nut member 33 and the screw 32, and consequently the rod 21 is kept at a position where the brakes are applied.

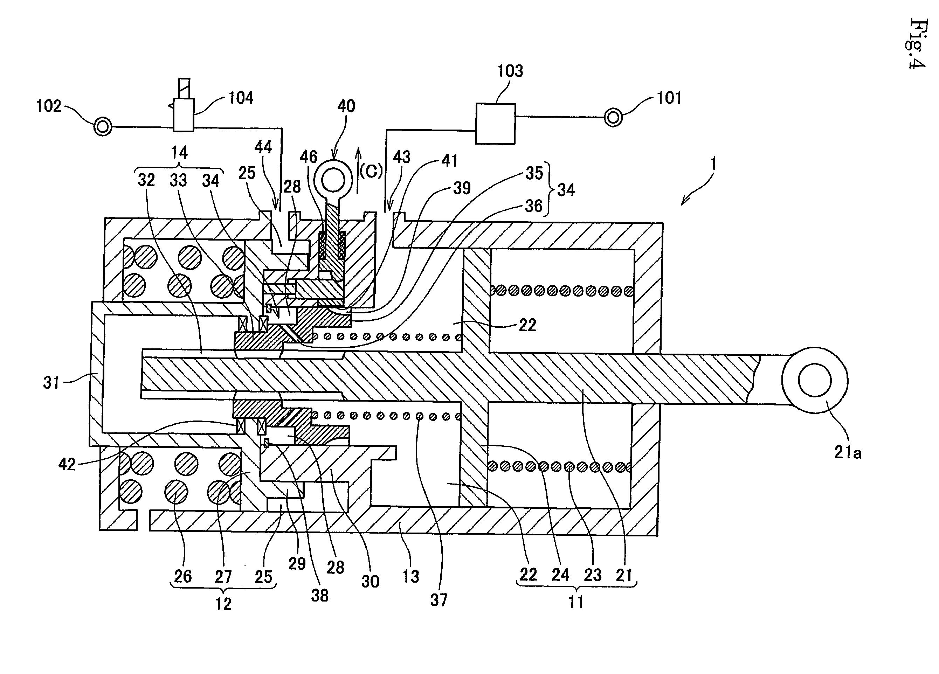

Fig. 4 is a sectional view of the brake cylinder device 1 for explaining a case where a spring brake force is manually released from a state that the spring brake 12 is in operation. Where the spring brake force is desired to be released, for example, a case where a railway vehicle is desired to be parked after a slight movement not by actuating an air compressor but by using a tractor, it is possible to release the spring brake force by operating the lock lever 40. In this case, when the lock lever 40 is manually pulled up to the direction indicated by the arrow (C) in the drawing, the blade edge 41 of the lock lever 40 is removed from the latch blade 39 of the sleeve member 35, the meshing means 36 between the nut member 33 and the sleeve member 35 becomes rotatable, while kept in meshed state, and consequently the clutch mechanism 14 rotates without load as a whole. Thereby, both the first piston 24 and the second piston 27 are able to move up to the stroke end due to an urging force of the first spring 23 and the second spring 26 to result in movement of the first piston 24 and the rod 21 in an anti-braking direction. As described above, it is possible to release manually the spring brake force of the spring brake 12 by operating the lock lever 40 and move railway vehicles or the like.

As described above, according to the brake cylinder device 1, compressed air to be supplied to the first pressure chamber 22 is supplied to the third pressure chamber 28, by which the third pressure chamber 28 allowing the second piston 27 to be moved in an anti-braking direction against an urging force of the second spring 26 acts on the second piston 27 as a pressure chamber divided and sectioned from the second pressure chamber 25. Therefore, when the normal brake 11 is in operation, the third pressure chamber 28 acts so that the second piston 27 moves in an anti-braking direction, thus making it possible to prevent a simultaneous operation of the normal brake 11 and the spring brake 12. Further, such a simple mechanism with the third pressure chamber for supplying compressed air supplied to the first pressure chamber 22 without the necessity for a double check valve which may often result in complicated piping, increases the number of components or maintenance load, thus making it possible to prevent a simultaneous operation of the normal brake and the spring brake. As a result, the mechanism can be made simple to greatly reduce costs.

Therefore, the brake cylinder device 1 is not only able to omit the double check valve but also able to prevent a simultaneous operation of the normal brake 11 and the spring brake 12 by using a simple mechanism.

Further, according to the brake cylinder device 1, since the second pressure chamber 25 and the third pressure chamber 28 are arranged respectively on the outer circumference of the second piston 27 and on the inner circumference thereof in the circumferential direction, the second piston 27 can be uniformly urged in an axially symmetrical manner against an urging force of the second spring 26 even upon actuation of either the second pressure chamber 25 or the third pressure chamber 28. Therefore, it is possible to realize a mechanism for uniformly urging the second piston 27 by a simple constitution in which the second pressure chamber 25 is arranged on the outer circumference and the third pressure chamber 28 is arranged on the inner circumference. Further, it is not necessary to install an additional mechanism for uniformly urging the second piston 27, thus making the mechanism simple to reduce costs.

Further, according to the brake cylinder device 1, a simple mechanism is provided in which the cylindrical wall 29 slidingly in contact with the inner cylindrical portion 30 formed inside the cylinder main body 13 is installed on the second piston 27 to section the second pressure chamber 25 and the third pressure chamber 28, thus making it possible to easily realize a constitution in which the second pressure chamber 25 is arranged on the outer circumference and the third pressure chamber 28 is arranged on the inner circumference.

Further, according to the brake cylinder device 1, a covering 31 is formed on the same side as the second spring 26 relative to the second piston 27 to enclose an end portion 21b of the rod 21 penetrating through the second piston 27. the end portion 21b is arranged on the same side as the second spring 26 relative to the second piston 27. Therefore, even in a constitution in which the rod 21 penetrates through the second piston 27, a simple constitution equipped with the covering 31 is used to effectively prevent the leakage of compressed air without providing a special seal mechanism at a shaft bush 42 or at a clearance between the second piston 27 and the rod 21, thus making the mechanism simple to reduce costs. Further, since the inside of the covering 31 is communicatively connected to the third pressure chamber 28 via the shaft bush 42 or a clearance between the second piston 27 and the rod 21, pressure fluid supplied to the third pressure chamber 28 is supplied inside the covering 31. In other words, since the inside thereof acts as an extended part of the third pressure chamber 28, a projected area of this part corresponding to the second piston 27 is changed, thus making it possible to easily adjust the balance between a force generated by pressure of the pressure fluid, a force generated by the second spring 26, a force generated by the second pressure chamber 25 and a force generated by the third pressure chamber 28.

Further, according to the brake cylinder device 1, it is possible to easily supply to the third pressure chamber 28 compressed air to be supplied to the first pressure chamber 22 by a simple mechanism which has a communication path 45 communicatively connecting the first pressure chamber 22 with the third pressure chamber 28.

Further, according to the brake cylinder device 1, a clutch mechanism 14 is provided which connects the rod 21 and the second piston 27 when the second piston 27 starts to move with respect to the rod 21 upon discharge of compressed air from the second pressure chamber 25, thereby making it possible to apply a spring brake force to the rod 21 via the second piston 27. Therefore, a clearance formed on the clutch mechanism 14 in a non-connection state is utilized, thereby allowing a clearance formed on the clutch mechanism 14 in the non-connection state to function also as the communication path 45 for supplying compressed air to be supplied to the first pressure chamber 22 to the third pressure chamber 28.

### (Embodiment 2)

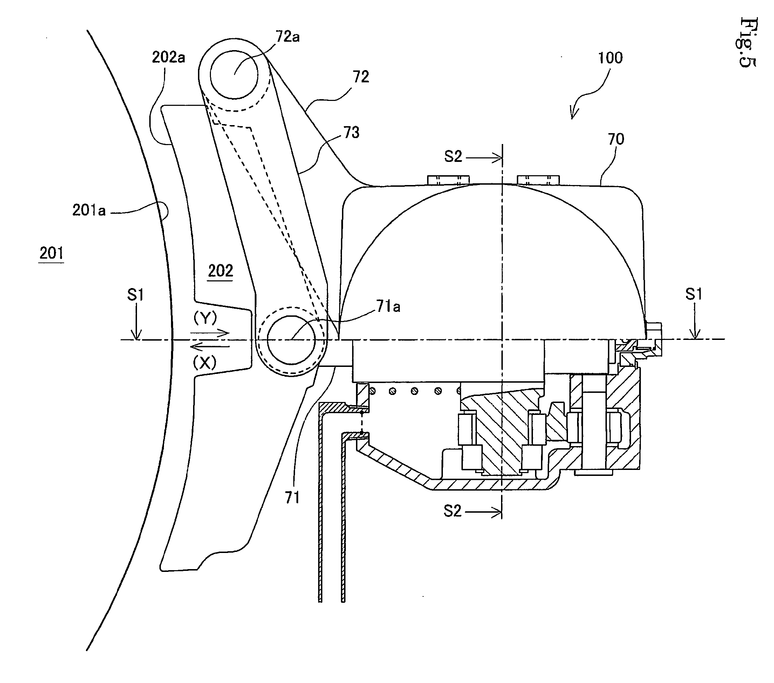

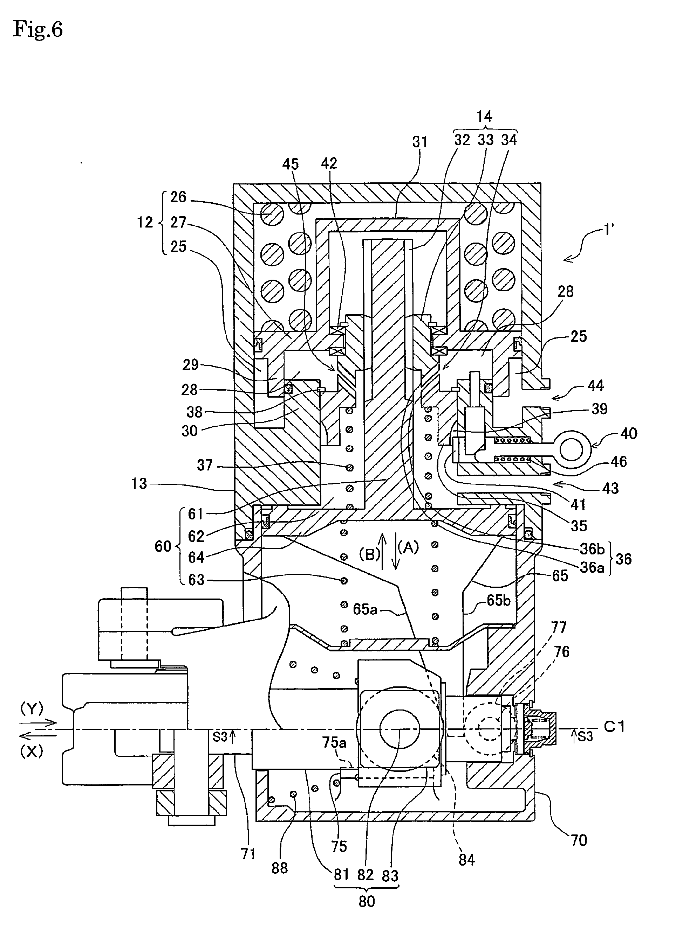

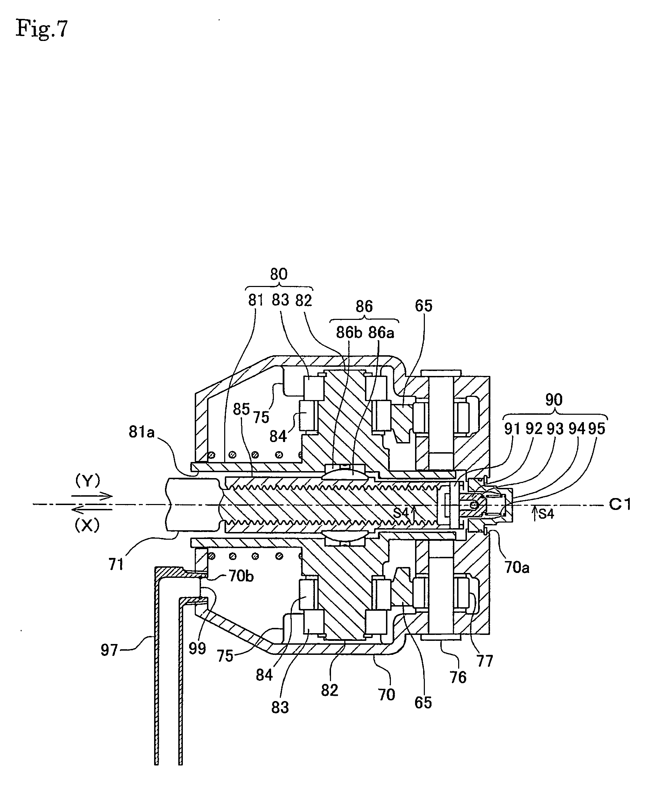

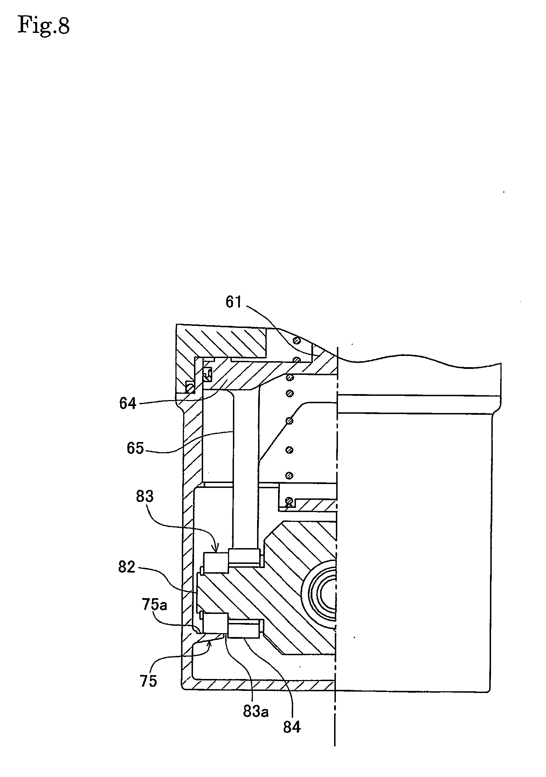

Next, a description will be given for a unit brake of Embodiment 2 in the present invention. Fig. 5 is a partial sectional view of a wheel 201 in the shaft direction when the wheel is attached to a unit brake 100 of Embodiment 2. Fig. 6 is a partial cross-sectional sagittal view taken along S1 to S1 in Fig. 5. Fig. 7 is a partial cross-sectional sagittal view taken along S3 to S3 in Fig. 6. Fig. 8 is a partial cross-sectional sagittal view taken along S2 to S2 in Fig. 5. It is noted that the unit brake of Embodiment 2 is provided with a brake cylinder device 1' having major parts of the brake cylinder device 1 explained in Embodiment 1, and members which are the same as those explained for Embodiment 1 in Fig. 5 to Fig. 8 will be given the same symbols and omitted for explanation.

As shown in Fig. 5, the unit brake 100 is a unit brake in which the braking face 202a of the brake shoe 202 is allowed to come into contact with the tread 210a of the wheel 201 of a vehicle, thereby friction is used to brake the rotation of the wheel 201.

The unit brake 100 is provided with a brake main body 70 formed in a box shaped so as to partially cover a driving mechanism of brake and a push rod 71 projecting toward a wheel from the inside of the brake main body 70. A supporting arm 72 extending above the wheel is fixed to the brake main body 70. A hanger 73 is supported at the end portion of the supporting arm 72 via a pin 72a so as to sway freely.

The brake shoe 202 is supported so as to rotate via a pin 71a with respect to the lower end portion of the hanger 73 and the leading end of the push rod 71.

As shown in a partial cross section cut in a cross section parallel with the shaft in Fig. 6 (a partial cross-sectional sagittal view taken along S1 to S1), in the unit brake 100, the brake cylinder device 1' is arranged in such a manner that a direction in which the first piston 64 moves (the braking direction A indicated by the arrow (A) in Fig. 5 to Fig. 8 and the anti-braking direction B indicated by the arrow (B)) is parallel with the shaft.

The normal brake 60 of the brake cylinder device 1' is composed of a rod 61, a first pressure chamber 62, a first spring 63, and a first piston 64. The end portion of the rod 61 in the braking direction A is fixed to the first piston 64 disposed inside the cylinder main body 13.A wedge 65 projecting so as to taper in the braking direction A is fixed to the first piston 64. It is noted that a pair of the wedges 65 are formed approximately in a symmetrical manner behind the push rod 71.

Further, an adjustor 80 is provided inside the brake main body 70, which is composed so as to advance into or retract from the wheel 201 in an advancing direction X (the direction indicated by the arrow (X) in Fig. 5, Fig. 6 and Fig. 7) or in a reverse direction, specifically, a retracting direction Y (the direction indicated by the arrow (Y) in Fig. 5, Fig. 6 and Fig. 7). The adjustor 80 is composed of a cylindrical sleeve portion 81 extending parallel with the advancing direction, a first supporting shaft 82 (supporting shaft) extending perpendicularly to an axial direction of the sleeve portion 81 from both the side faces of the sleeve portion 81 and a rectangular slide plate 83 fitted into the first supporting shaft 82. Further, a first roller 84 (roller) is arranged on the first supporting shaft 82 so as to rotate freely.

The brake main body 70 is provided with a guide portion 75 having a guide face75a extending in the advancing and retracting direction so as to be orthogonal to the braking direction A and also projecting partially from the inner face of the brake main body 70.

The adjustor 80 is attached to the brake main body 70 so that the first supporting shaft 82 is made perpendicular to the braking direction A, and arranged so that the edge face 83a of the slide plate 83 in the braking direction A is able to slide in contact with the guide face 75a of the guide portion 75 (refer to Fig. 8).

As shown in Fig. 7, a sheath rod 85 is installed inside the sleeve portion 81 of the adjustor 80. The sheath rod 85 is supported via a spherical bearing 86 made up of a spherical member 86a installed on the outer circumference of the sheath rod 85 with respect to the sleeve inner circumferential face 81a and a shaft bush portion 86b installed with respect to the sleeve inner circumferential face 81a, and restricted for movement relative to the sleeve portion 81 in an advancing and retracting direction. Thereby, the sheath rod 85 is composed so as to advance or retract in association with an advancing and retracting movement of the adjustor 80.

The sheath rod 85 is a tubular member extending linearly,and a female thread is made substantially all over the inner circumferential face in a longitudinal direction.It is noted that the sheath rod 85 is supported by the sleeve portion 81 via the spherical bearing 86 so as to sway within a predetermined angle with respect to the cylindrical central axis Cl of the sleeve portion 81 (indicated by the single dotted and dashed line in Fig. 7)and also rotate around the cylindrical central axis.

A male thread is made on the push rod 71, which is screwed with the female thread of the sheath rod 85 on the outer circumferential face in the vicinity of the end portion opposite one end to which the brake shoe 202 is fitted. It is noted that the length of a portion at which the male thread is made is made approximately equal to the length of the sheath rod 85. Then, the push rod 71 is installed in such a state that the end portion at which the male thread is made is screwed into the sheath rod 85. Thereby, the push rod 71 is able to advance or retract in association with an advancing and retracting movement of the sheath rod 85, thus making it possible to press the brake shoe 202 installed on the leading end against the tread 201a of the wheel 201 and release it from the tread 201a.

Further, the brake main body 70 is provided with a second supporting shaft 76 extending perpendicularly with respect to the advancing and retracting direction of the adjustor 80 and also the braking direction A in the vicinity of the end portion opposite the wheel. A second roller 77 is supported by the second supporting shaft 76 so as to rotate.

It is noted that the first rollers 84 and the slide plate 83 are installed symmetrically in pairs with respect to the adjustor 80 behind sleeve portion 81 and the second rollers 77 are also installed in pairs with respect to the second supporting shaft 76 so as to oppose a pair of the first rollers 84, 84. Further, guide portions 75 are formed in pairs on the brake main body 70 so as to oppose a position at which a pair of the slide plates 83, 83 are installed.

A wedge 65 installed on the rod leading end of the brake cylinder device 1' is fixed to the rod 61 via the first piston 64 in such a manner that the end portion is inserted between the first roller 84 and the second roller 77. Then, the wedge 65 is provided with a reaction face 65b in contact with the second roller 77 and extending in a direction parallel to the first piston 64 and an inclined acting surface 65a which is inclined so as to come closer to the reaction face 65b moving toward the end portion opposite the first piston 84 also in contact with the first roller 64. In other words, the inclined acting surface 65a is an actuation face which is inclined so as to move down in a retracting direction of the adjustor 80 toward the braking direction A.

Next, a description will be given for the motion of the brake unit.
First, where the brakes are applied, on the basis of instructions from a controller (not shown), compressed air is supplied to the first pressure chamber 62 via the first port 43, thereby the first piston 64 is moved in the braking direction A (refer to Fig. 6). In this instance, the wedge 65 is moved in the braking direction A in association with the movement of the first piston 64.

Upon movement of the wedge 65 in the braking direction A, the reaction face 65b is moved in the braking direction A, while being in contact with the second roller 77, and the inclined acting surface 65a inclined to the reaction face 65b is moved in the braking direction A, while urging the first roller 84 installed on the adjustor 80. In this instance, an urging force having at least a component X in an advancing direction X acts on the first roller 84 from the inclined acting surface 65a. Since the adjustor 80 is restricted for movement in the braking direction A by the guide face 75a, the adjustor 80 is moved in the advancing direction X against an urging force of the spring 88, while allowing the slide plate 83 to be in contact with the guide face 75a. In association with this movement, a push rod 71 (refer to Fig. 7) connected to the sleeve portion 81 via the spherical bearing 86 and the sheath rod 85 is also moved in the advancing direction X. Thereby, a brake shoe 202 installed on the push rod 71 is pressed against a wheel 201, thereby braking the rotation of the wheel 201.

On the other hand, where the brakes are relaxed, compressed air is discharged from the first pressure chamber 62 via the first port 43 on the basis of instructions from a controller (not shown), and the first piston 64 is moved in an anti- braking direction B.In this instance, the wedge 65 is to be moved in the anti-braking direction B in association with the movement of the first piston 64.

Since the adjustor 80 is pressed in a retracting direction Y by an urging force of the spring 88, the first roller 84 in contact with the inclined acting surface 65a is moved in the retracting direction Y upon movement of the wedge 65 in the anti-braking direction B. In association with movement of the adjustor 80 in the retracting direction Y, the push rod 71 is also moved in the retracting direction Y. Thereby, the brake shoe 202 installed on the push rod 71 is also moved in the retracting direction Y and removed from a wheel 201 to release the brake of the wheel 201.

It is noted that since the brake shoe 202 is connected to a hanger 73 (refer to Fig. 5), it makes a circular movement at the center of the base end of the hanger 73. However, since the push rod 71 is connected to the adjustor 80 via the spherical bearing 86 (refer to Fig. 7), the circular movement is allowed at the leading end of the push rod 71.

As described above, the unit brake 100 of Embodiment 2 is that in which the brake shoe 202 is allowed to be in contact with the wheel 201 of a vehicle, thereby braking the rotation of the wheel 201.

Therefore, provided is a brake cylinder device 1' arranged so that the braking direction A, specifically, a direction in which the first piston 64 moves, is parallel with the shaft direction of the wheel 201,an adjustor 80 installed inside the brake main body 70 so as to advance or retract freely in a direction perpendicular to the braking direction A (the advancing direction X or the retracting direction Y) and equipped with a first supporting shaft 82 extending perpendicularly to the advancing and retracting direction (the advancing direction X or the retracting direction Y) and the braking direction A, a first roller 84 installed on the first supporting shaft 82 so as to rotate freely, a push rod 71 installed on the adjustor 80 in which the brake shoe 202 is connected to the end portion extending from the brake main body 70 in the advancing direction X of the adjustor 80 and a wedge 65 firmly fixed to the rod 61.

The wedge 65 is provided with an inclined acting surface 65a which is inclined in the braking direction A and able to urge the first roller 84 toward the advancing direction X when moved in the braking direction A.

According to this constitution, the first piston 64 is moved in the braking direction A, by which the wedge 65 firmly fixed to the rod 61 is also moved in the same direction. In this instance, the inclined acting surface 65a of the wedge 65 is in contact with the first roller 84, urging the first roller 84 in the advancing direction. Thereby, the adjustor 80 on which the first roller 84 is installed is moved in the advancing direction together with the first roller 84, and the push rod 71 attached to the adjustor 80 is also moved in the advancing direction. Then, the brake shoe 202 installed on the leading end of the push rod 71 is in contact with the wheel 201 to brake the rotation of the wheel 201 due to friction.

The brake cylinder device 1' is arranged in such a manner that a direction in which the first piston 64 moves is parallel with the shaft of the wheel 201, thus making it possible to effectively use a space in an axial direction of the shaft and also make small the space necessary for installing the unit brake 100 in a height direction of the vehicle.

Further, since the brake cylinder device is composed so as to urge the first roller 84 by the inclined acting surface 65a of the wedge 65, the inclined acting surface 65a is adjusted for the angle with respect to a direction in which the first piston 64 moves, thereby making it possible to adjust a force by which the brake shoe 202 is pressed against the wheel 201. For example, where this angle is made smaller than 4°, the adjustor 80 is made smaller in stroke than the first piston 64, thereby making it possible to increase an urging force of the brake cylinder device 1' and convert the urging force into a force by which the brake shoe 202 is pressed against the wheel 201.

Further, since the push rod 71 is supported so as to swing via the spherical bearing 86 with respect to the adjustor 80, the brake shoe 202 installed on the leading end of the push rod 71 is allowed for movements of the adjustor 80 other than those in the advancing and retracting direction. Thereby, it is possible to give a greater degree of freedom to movements of the brake shoe 202 and also provide a constitution so that the brake shoe 202 is in contact with the wheel 201 more stably when the brakes are applied.

Next, a description will be given for a position adjusting mechanism of the brake shoe installed on the unit brake 100.

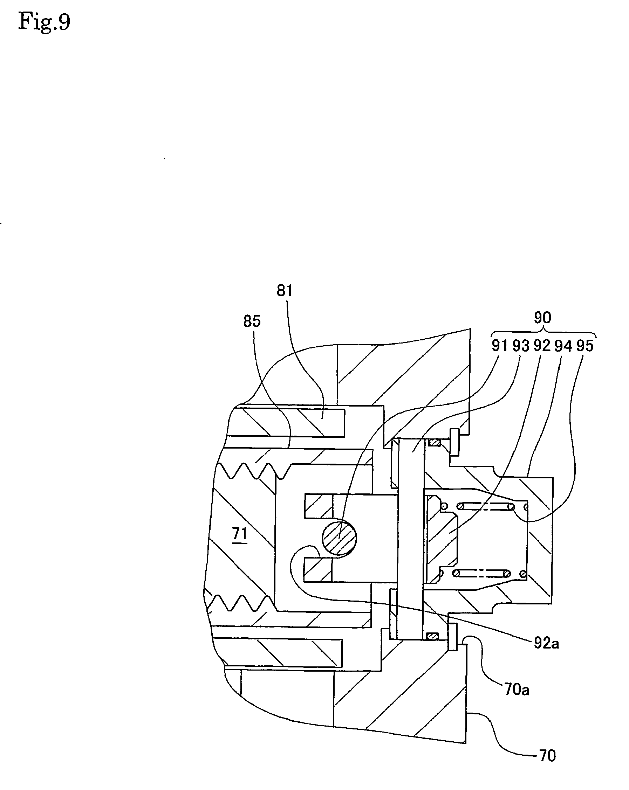

As shown in Fig. 7, an adjustable nut 90 (rotating means) for relatively rotating the sheath rod 85 with respect to the push rod 71 is installed on the end portion of the sheath rod 85 in the retracting direction Y. Fig. 9 is a sectional view taken along S4 to S4 in the vicinity of the adjustable nut 90 in Fig. 7.

The adjustable nut 90 is composed of a pin 91 inserted into a through hole penetrating diametrically at the end portion of the sheath rod 85, an engaging member 92 which can be engaged with the pin 91 in a direction in which the sheath rod 85 rotates at the center of the shaft, a pin 93 penetrating diametrically through the engaging member 92, a nut portion 94 arranged so as to cover the engaging member 92, with the one end opened, in which both ends of the pin 93 are penetrated to be installed on a circumferential wall, and a spring 95 installed between the nut portion 94 and the engaging member 92.

The nut portion 94 is installed rotatably on the brake main body 70 in such a manner that the end portion of the push rod 71 on the brake main body 70 in the retracting direction Y covers the opening portion 70a formed on an opposing circumferential wall. It is possible to rotate the engaging member 92 via the pin 93 by rotation of the nut portion 94.

Further, a through hole through which the pin 93 of the engaging member 92 penetrates is formed as a long hole extending in the advancing and retracting direction. Therefore, the engaging member 92 is able to move relatively in the advancing and retracting direction with respect to the pin 93 fixed to the nut portion 94. Still further, the engaging member 92 is provided at the end portion opposing the push rod 71 with an engagement groove 92a extending diametrically and having such a width and a depth that can be engaged with the pin 91 (refer to Fig. 9).

According to the constitution of the above adjustable nut 90, where the direction of the pin 91 installed on the rear end of the sheath rod 85 is in agreement with that of the engagement groove 92a of the engaging member 92 upon retraction of the sheath rod 85 in the retracting direction Y, the pin 91 is engaged with the engagement groove 92a. On the other hand, where the direction of the pin 91 is different from that of the engagement groove 92a, the engaging member 92 moves inside the nut portion 94 in the retracting direction Y against an urging force of the spring 95 due to a fact that the end portion of the engaging member 92 is urged by the pin 91. Therefore, there is no chance that the adjustable nut 90 prevents such a motion that the sheath rod 85 moves in the retracting direction Y.

Even where the direction of the pin 91 is not in agreement with that of the engagement groove 92a and the engaging member 92 moves in the retracting direction Y against an urging force of the spring 95, the nut portion 94 is rotated from outside, thereby the engaging member 92 is rotated up to a position at which the direction of the engagement groove 92a is in agreement with that of the pin 91. Then, the engaging member 92 moves in the advancing direction X due to an urging force of the spring 95 and the engagement groove 92a is consequently engaged with the pin 91.

In a state that the pin 91 is engaged with the engaging member 92, the nut portion 94 is rotated from outside, by which the sheath rod 85 can be rotated via the pin 93, the engaging member 92 and the pin 91. In a state that the push rod 71 is restricted for rotation, the sheath rod 85 is rotated, by which the push rod 71 is allowed to advance and retract with respect to the sheath rod 85 due to the screw action. It is, thus, possible to adjust an extent of projection from the brake main body 70, specifically, to adjust a position of the brake shoe 202.

As described above, the unit brake 100 of Embodiment 2 is provided with a push rod 71 in which a male thread is made on the outer circumferential face thereof. The unit brake 100 is additionally provided with a cylindrical sheath rod 85a screwed and installed on the push rod 71 in which a female thread screwed with the male thread is made on the inner circumferential face and a spherical bearing 86 for providing support by connecting the sheath rod 85 with the adjustor 80 in such a manner that the sheath rod 85 is restricted for relative movement with respect to the adjustor 80 in the advancing and retracting direction, the sheath rod 85 can sway with respect to the adjustor 80 and also the sheath rod 85 can rotate around the cylindrical central axis with respect to the adjustor 80. Further, an adjustable nut 90 for rotating the sheath rod 85 from outside the brake main body 70 is installed on the end portion of the sheath rod 85 in the retracting direction of the adjustor 80.

According to this constitution, since the sheath rod 85 is supported by the adjustor 80 via the spherical bearing 86,it is able to rotate relatively around the cylindrical axis with respect to the adjustor 80. Then, since the adjustable nut 90 is installed on the end portion, the sheath rod 85 is rotated by applying a rotational force to the nut portion 94 of the adjustable nut 90 from outside, thereby the push rod 71 screwed into the sheath rod 85 is allowed to advance and retract. As a result, it is possible to easily adjust a clearance between the brake shoe 202 installed on the leading end of the push rod 71 and the wheel 201. Further, since the sheath rod 85 is supported so as to sway with respect to the adjustor 80 via the spherical bearing 86, it is possible to give a greater degree of freedom to motions of the brake shoe 202 installed on the leading end of the push rod 71.

Then, a description will be given for a ventilation channel formed on the unit brake 100.

As shown in Fig. 5, a ventilation hole 70b is formed on the brake main body 70 below a position at which the push rod 71 is extended. A female thread is made on the inner circumferential face of the ventilation hole 70b. Then, a ventilation tube 97, which is a tubular member formed with an elastic member such as rubber, is installed in the ventilation hole 70b. The ventilation tube 97 has a male thread which can be screwed with the female thread of the ventilation hole 70b on the outer circumferential face of the connection portion 98 located at the end portion thereof and is connected to the ventilation hole 70b by screwing the connection portion 98 into the ventilation hole 70b.

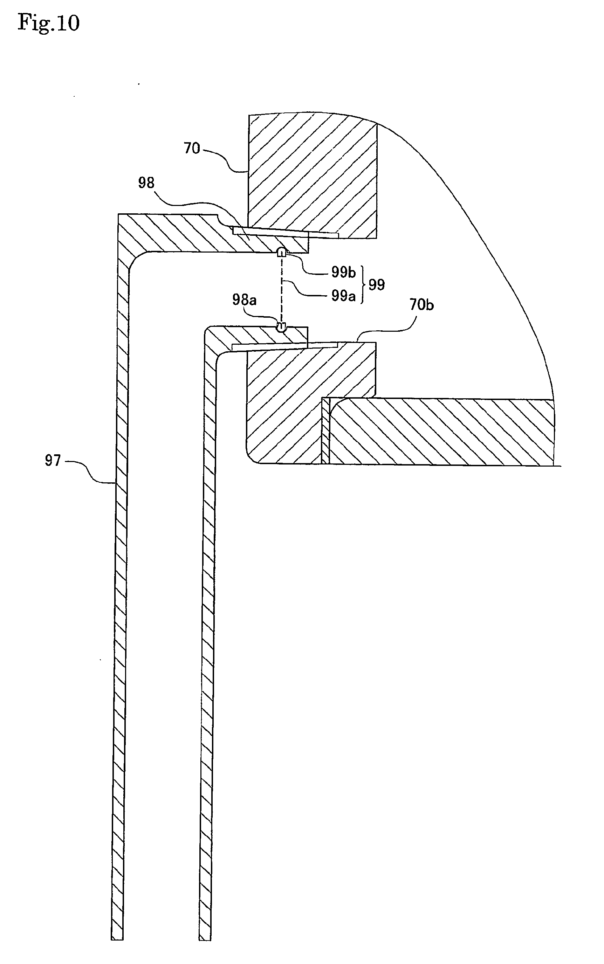

Fig. 10 is an enlarged sectional view for showing a connection portion 98. As shown in Fig. 10, a recessed groove portion 98a, which is a groove extending continuously to the circumferential direction, is formed on the inner circumferential face of the connection portion 98 of the ventilation tube 98. Further, a circular-plate shaped filter 99 is fitted and installed into the recessed groove portion 98a.

It is noted that in place of forming the recessed groove portion 98a on the inner circumferential face, a ventilation tube 97 may be composed so as to undergo a partial elastic deformation from the inner circumference to press-fit a filter 99, by which the filter 99 is caught diametrically by an elastic recovery force of the thus elastically deformed ventilation tube 97 and fixed to the ventilation tube 97.

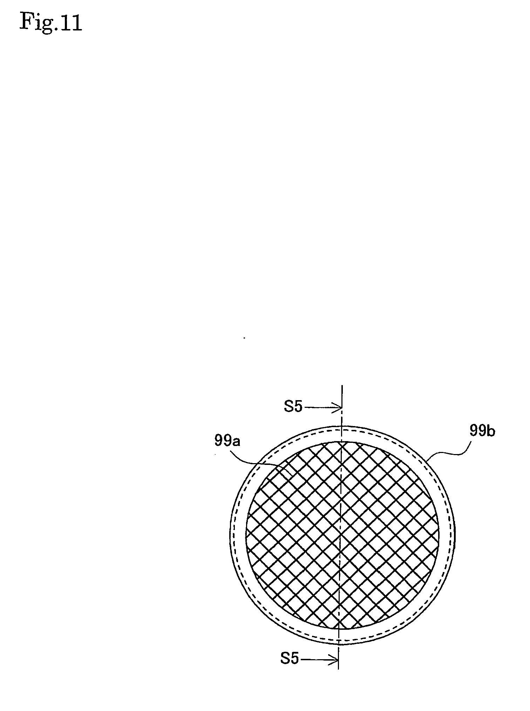

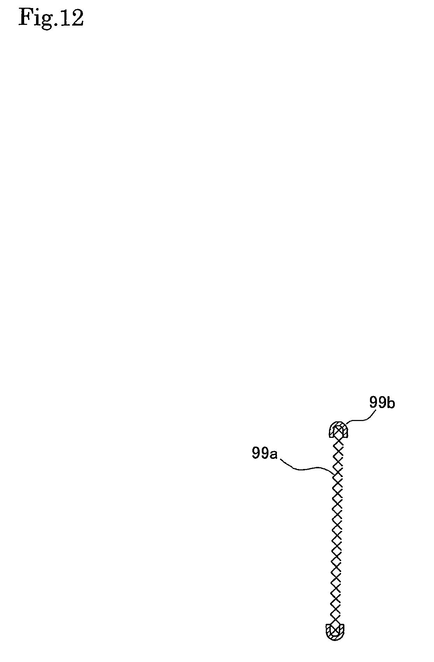

Fig. 11 is a plan view of the filter 99, and Fig. 12 is a sectional view taken along S5 to S5 in Fig. 11. As shown in these drawings, the filter 99 is composed of a screen portion 99a for preventing the passage of dust or the like and a ring portion 99b for enclosing the screen portion 99a. The ring portion 99b is made with a material higher in rigidity than the ventilation tube 97 such as steel and able to increase a diametrical rigidity of the filter 99.

Further, the ventilation tube 97 is formed by extending to the wheel 201 from a portion connected with the ventilation hole 70b and thereafter bending downward at 90 degrees. Thereby, it is possible to prevent water or the like from entering into the brake main body 70 through the ventilation tube 97 from outside.

As described above, the unit brake 100 of Embodiment 2 is additionally provided with a ventilation hole 70b communicatively connecting the inside of the brake main body 70 with the outside thereof in which a female thread is made on the inner circumferential face, a ventilation tube 97 formed by a tubular elastic member and having at the end portion a connection portion 98 on which a male thread screwed with the female thread of the ventilation hole 70b is made, and a filter 99 fitted and installed into the connection portion 98 and made with a material higher in rigidity than the connection portion 98.

According to this constitution, since the connection portion 98 is made with an elastic member, the filter 99 can be easily fitted into the inner circumferential face of the connection portion 98 and fixed. Thereby, making unnecessary is a special member for attaching the filter 99.

Further, if the connection portion 98 is formed to be greater in outer diameter than the ventilation hole 70b, it is possible to deform the connection portion 98 elastically so as to reduce the diameter when the connection portion 98 is screwed into the ventilation hole 70b. In this instance, the filter 99 is retained in a state that it is caught diametrically by the connection portion 98 receiving a force from the ventilation hole 70b in a direction in which the diameter is reduced, thus making it possible to further strengthen the connection with the connection portion 98.

An explanation has been so far made about embodiments of the present invention. However, the present invention shall not be limited to the above embodiments and may be carried out by various modifications within the scope of the claims.

Further, it is possible to carry out an invention of the following brake cylinder device as a brake cylinder device of a different perspective of the present invention.

The brake cylinder device of a different perspective of the present invention relates to a brake cylinder device which is provided with a normal brake having a first piston in which a first pressure chamber and a first spring act so as to oppose each other, with a rod projecting, wherein pressure fluid is supplied to the first pressure chamber, thereby the first piston is moved in the braking direction against an urging force of the first spring and a spring brake having a second piston installed so as to move in a direction axially of the rod in which a second pressure chamber and a second spring act so as to oppose each other, with the rod penetrating through, wherein a state that pressure fluid is supplied to the second pressure chamber is shifted to a state that it is discharged, thereby the second piston is moved in the braking direction by an urging force of the second spring, or the brake cylinder device which is capable of actuating both the normal brake and the spring brake.

Then, the brake cylinder device of a different perspective of the present invention has features in which a covering formed so as to enclose and cover the end portion arranged on the second spring with respect to the second piston on the rod penetrating through the second piston is installed on the side opposing the second spring of the second piston, and the covering is disposed in such a manner as to penetrate through the end portion on the side at which the second spring is installed on the cylinder main body including the normal brake and the spring brake and project outside the cylinder main body.

It is noted that the brake cylinder device of a different perspective of the invention can be carried out, for example, as the brake cylinder device 1 of the present embodiment. In other words, it can be carried out as a brake cylinder device having the normal brake 11, the spring brake 12, the cylinder main body 13, the covering 31 and others in the brake cylinder device 1. In this instance, in a state given in Fig. 1 that the spring brake 12 is not in operation, the second piston 27 is urged in the anti-braking direction by the action of the second pressure chamber 25 (and the third pressure chamber 28). Therefore, an extent at which the covering 31 is projected outside the cylinder main body 13 is a projection quantity X1 indicated by the double-end arrow in the drawing. On the other hand, in a state given in Fig. 3 that the spring brake 12 is in operation, the second piston 27 is urged in the braking direction by the action of the second spring 26. Therefore, an extent at which the covering 31 is projected outside the cylinder main body 13 is a projection quantity X2 indicated by the double-end arrow in the drawing, which is smaller than the projection quantity X1 when the spring brake 12 is not in operation (specifically, established is a relationship of X2 < X1). Consequently, according to the present invention, it is possible to easily recognize visually an operation state of the spring brake 12 from outside the cylinder main body 13 only by confirming an extent of the covering 31 projected from the projection cylinder main body 13. It is noted that in order to more easily recognize visually an extent of the covering 31 projected from the cylinder main body 13, for example, the covering 31 may be painted in a color apparently distinguishable from the color painted on the cylinder main body 13 or a fluorescent paint may be used only at the covering 31.

## Claims

1. A brake cylinder device (1;1') comprising:
a service brake (11;60) having a first piston (24;64), a rod (21, 61) projecting from the first piston (24;64), a first pressure chamber (22;62) and a first spring (23;63), the first piston (24;64) being subjected to the action of the first pressure chamber (22;62) and the first spring (23;63) sandwiching the first piston (24;64) therebetween, thereby moving the first piston (24;64) in a braking direction against an urging force of the first spring (23;63) when a supply of pressure fluid to the first pressure chamber (22;62) is started, a braking force being generated with the movement of the first piston (24;64) in the braking direction;
a spring brake (12) having a second piston (27) installed so as to move in an axial direction of the rod (21, 61) and penetrated by the rod (21, 61), a second pressure chamber (25) and a second spring (26), the second piston (27) being subjected to the action of the second pressure chamber (25) and the second spring (26) sandwiching the second piston (27) therebetween, thereby moving the second piston (27) in the braking direction against an urging force of the second spring (26) when a supply of pressure fluid to the second pressure chamber (25) is stopped and a discharge of pressure fluid from the second pressure chamber (25) is started; **characterised in that**
a third pressure chamber (28) arranged ,separated from the second pressure chamber (25), on the opposite side of the second spring (26) relative to the second piston (27), the second piston (27) being subjected to the action of the third pressure chamber (28), thereby moving the second piston (27) in an anti-braking direction, that is a direction reverse to the braking direction, against an urging force of the second spring (26) when pressure fluid supplied to the first pressure chamber (22;62) is supplied to the third pressure chamber (28).

2. The brake cylinder device (1;1') as set forth in claim 1, wherein the second pressure chamber (25) is arranged along the circumferential direction on the outer circumference of the second piston (27) and the third pressure chamber (28) is arranged along the circumferential direction on the inner circumference of the second piston (27).

3. The brake cylinder device (1;1') as set forth in claim 2, wherein the second piston (27) is provided with a cylindrical wall (29) disposed along the circumferential direction of the second piston (27) and projected in the braking direction to be formed into a cylindrical shape, thereby sectioning the second pressure chamber (25) and the third pressure chamber (28), and the cylindrical wall (29) is slidingly in contact with an inner cylindrical portion (30) formed in a tubular shape along the circumferential direction of the second piston (27) inside a cylinder main body (13) including the normal brake (11;60) and the spring brake (12).

4. The brake cylinder device (1;1') as set forth in any one of claim 1 to claim 3, wherein a covering (31) is formed on the same side as the second spring (26) relative to the second piston (27) to enclose an end of the rod (21, 61) penetrating through the second piston (27), the end being arranged on the same side as the second spring (26) relative to the second piston (27).

5. The brake cylinder device (1;1') as set forth in any one of claim 1 through claim 3 which is provided with a communication path (45) for connecting communicatively the first pressure chamber (22;62) with the third pressure chamber (28), wherein pressure fluid supplied to the first pressure chamber (22;62) is supplied to the third pressure chamber (28) through the communication path (45).

6. The brake cylinder device (1;1') as set forth in claim 5 which is additionally provided with a clutch mechanism (14) in which a supply of pressure fluid to the second pressure chamber (25) is stopped and a discharge of pressure fluid from the second pressure chamber (25) is started, thereby giving a connection state for connecting the rod (21, 61) with the second piston (27) when the second piston (27) starts to move with respect to the rod (21, 61) by an urging force of the second spring (26), and giving a non-connection state for releasing the connection of the rod (21, 61) with the second piston (27) in a state that pressure fluid is supplied to the second pressure chamber (25),
wherein the communication path (45) is formed at the clutch mechanism (14) which is in the non-connection state.

7. A unit brake (100) by which a brake shoe (102) is brought into contact with the wheel (201) of a vehicle to brake the rotation of the wheel (201),
the unit brake (100) comprising a brake cylinder device (1') described in any one of claim 1 to claim 3 arranged in such a manner that the braking direction is parallel with the shaft direction of the wheel(201);
an adjustor (80) installed so as to advance and retract freely in a direction perpendicular to the braking direction inside a brake main body (70) and having a supporting shaft (82) extended perpendicularly in the advancing and retracting direction and the braking direction;
a roller (84) installed on the supporting shaft (82) so as to rotate freely;
a push rod (61) installed on the adjustor (80) in which the brake shoe is connected to the end portion extended from the brake main body (70) in the advancing direction of the adjustor (80); and
a wedge (65) firmly fixed to the rod (61),
wherein the wedge (65) has an inclined acting surface that is inclined in the braking direction and capable of urging the roller (84) in the advancing direction when the wedge (65) is moved in the braking direction.

8. The unit brake (100) as set forth in claim 7, which is additionally provided with a spherical bearing (86) for providing support so that the push rod (61) can swing with respect to the adjustor (80).

## Patentansprüche

1. Bremszylindervorrichtung (1; 1'), umfassend:
eine Betriebsbremse (11; 60), die einen ersten Kolben (24; 64), einen vom ersten Kolben (24; 64) hervorstehenden Stab (21; 61), eine erste Druckkammer (22; 62) und eine erste Feder (23; 63) aufweist, wobei der erste Kolben (24; 64) der Einwirkung der ersten Druckkammer (22; 62) und der ersten Feder (23; 63) unterliegt, die den ersten Kolben (24; 64) umschliessen, wodurch sich der erste Kolben (24; 64) in einer Bremsrichtung gegen eine Drangkraft der ersten Feder (23; 63) bewegt, wenn eine Zufuhr von Druckflüssigkeit zur ersten Druckkammer (22; 62) gestartet wird, wobei eine Bremskraft mit der Bewegung des ersten Kolbens (24; 64) in der Bremsrichtung generiert wird,
eine Federbremse (12), die einen zweiten Kolben (27), der so installiert ist, daß er sich in einer axialen Richtung des Stabes (21; 61) bewegt und von dem Stab (21; 61) durchdrungen wird, eine zweite Druckkammer (25) und eine zweite Feder (26) aufweist, wobei der zweite Kolben (27) der Einwirkung der zweiten Druckkammer (25) und der zweiten Feder (26) unterliegt, die den zweiten Kolben (27) umschliessen, wodurch sich der zweite Kolben (27) in der Bremsrichtung gegen eine Drangkraft der zweiten Feder (26) bewegt, wenn eine Zufuhr von Druckflüssigkeit zur zweiten Druckkammer (25) gestoppt wird und ein Ablassen von Druckflüssigkeit aus der zweiten Druckkammer (25) gestartet wird,
**dadurch gekennzeichnet, daß**
eine dritte Druckkammer (28), die getrennt von der zweiten Druckkammer (25) ist, auf der gegenüberliegenden Seite der zweiten Feder (26) in bezug zum zweiten Kolben (27) angeordnet ist, wobei der zweite Kolben (27) der Einwirkung der dritten Druckkammer (28) unterliegt, wodurch sich der zweite Kolben (27) in einer Nichtbremsrichtung, die eine Richtung entgegen der Bremsrichtung ist, gegen eine Drangkraft der zweiten Feder (26) bewegt, wenn zur ersten Druckkammer (22; 62) zugeführte Druckflüssigkeit zur dritten Druckkammer (28) zugeführt wird.

2. Bremszylindervorrichtung (1; 1') nach Anspruch 1, wobei die zweite Druckkammer (25) entlang der Umfangsrichtung an dem äußeren Umfang des zweiten Kolbens (27) angeordnet ist und die dritte Druckkammer (28) entlang der Umfangsrichtung an dem inneren Umfang des zweiten Kolbens (27) angeordnet ist.

3. Bremszylindervorrichtung (1; 1') nach Anspruch 2, wobei der zweite Kolben (27) mit einer zylindrischen Wand (29) versehen ist, die entlang der Umfangsrichtung des zweiten Kolbens (27) angeordnet ist und die in der Bremsrichtung hervorsteht, um in eine zylindrische Form gebracht zu werden, wodurch sie die zweite Druckkammer (25) und die dritte Druckkammer (28) unterteilt, und die zylindrische Wand (29) sich in gleitendem Kontakt mit einem inneren zylindrischen Abschnitt (30) befindet, der in einer röhrenförmigen Form entlang der Umfangsrichtung des zweiten Kolbens (27) in einem Zylinderhauptkörper (13), der die Normalbremse (11; 60) und die Federbremse (12) umfaßt, ausgebildet ist.

4. Bremszylindervorrichtung (1; 1') nach einem der Ansprüche 1 bis 3, wobei eine Abdeckung (31) auf derselben Seite wie die zweite Feder (26) in bezug zum zweiten Kolben (27) ausgebildet ist, um ein Ende des Stabes (21; 61) zu umschließen, das den zweiten Kolben (27) durchdringt, wobei das Ende auf derselben Seite wie die zweite Feder (26) in bezug zum zweiten Kolben (27) angeordnet ist.

5. Bremszylindervorrichtung (1; 1') nach einem der Ansprüche 1 bis 3, die mit einem Kommunikationsweg (45) zum kommunikativen Verbinden der ersten Druckkammer (22; 62) mit der dritten Druckkammer (28) versehen ist, wobei zur ersten Druckkammer (22; 62) zugeführte Druckflüssigkeit zur dritten Druckkammer (28) durch den Kommunikationsweg (45) zugeführt wird.

6. Bremszylindervorrichtung (1; 1') nach Anspruch 5, die zusätzlich mit einem Kupplungsmechanismus (14) versehen ist, in dem eine Zufuhr von Druckflüssigkeit zur zweiten Druckkammer (25) gestoppt wird und ein Ablassen von Druckflüssigkeit aus der zweiten Druckkammer (25) gestartet wird, wodurch ein Verbindungszustand zum Verbinden des Stabes (21; 61) mit dem zweiten Kolben (27) hergestellt wird, wenn der zweite Kolben (27) beginnt, sich in bezug zum Stab (21; 61) mittels einer Drangkraft der zweiten Feder (26) zu bewegen, und ein Nichtverbindungszustand zum Freilassen der Verbindung des Stabes (21; 61) mit dem zweiten Kolben (27) in einen Zustand, in dem Druckflüssigkeit zur zweiten Druckkammer (25) zugeführt wird, hergestellt wird,
wobei der Kommunikationsweg (45) an dem Kupplungsmechanismus (14) ausgebildet ist, der sich in dem Nichtverbindungszustand befindet.

7. Bremseinheit (100), bei der ein Bremsschuh (102) mit dem Rad (201) eines Fahrzeuges in Kontakt gebracht wird, um die Rotation des Rades (201) zu bremsen,
wobei die Bremseinheit (100) umfaßt: eine Bremszylindervorrichtung (1') nach einem der Ansprüche 1 bis 3, die so angeordnet ist, daß die Bremsrichtung parallel zur Achsenrichtung des Rades (201) ist,
einen Verstellmechanismus, der so installiert ist, daß er sich in einer Richtung senkrecht zur Bremsrichtung in einem Bremshauptkörper (70) frei vor- und zurückbewegt, und der eine Stützwelle (82), die sich senkrecht in die Vor- und Zurückbewegungsrichtung und der Bremsrichtung erstreckt,
eine Rolle (84), die auf der Stützwelle (82) so installiert ist, daß sie frei rotiert,
eine auf dem Verstellmechanismus (80) installierte Schubstange (61), an der der Bremsschuh mit dem Endabschnitt verbunden ist, der sich von dem Bremshauptkörper (70) in der Vorwärtsbewegung des Verstellmechanismus (80) erstreckt, und
einen Keil (65), der fest an dem Stab (61) befestigt ist,
wobei der Keil (65) eine geneigte wirkende Oberfläche aufweist, die in der Bremsrichtung geneigt ist und dazu fähig ist, die Rolle (84) in die Vorwärtsrichtung zu drängen, wenn der Keil (65) in der Bremsrichtung bewegt wird.

8. Bremseinheit (100) nach Anspruch 7, die zusätzlich mit einem Pendellager (86) zum Bereitstellen einer Stütze, daß die Schubstange (61) in bezug zum Verstellmechanismus (80) schwingen kann, versehen ist.

## Revendications

1. Cylindre de frein (1 ; 1') comportant :
un frein de service (11 ; 60) ayant un premier piston (24 ; 64), une tige (21, 61) dépassant du premier piston (24 ; 64), une première chambre de pression (22; 62) et un premier ressort (23; 63), le premier piston (24 ; 64) étant soumis à l'action de la première chambre de pression (22; 62) et du premier ressort (23; 63) enserrant le premier piston (24 ; 64), en déplaçant ainsi le premier piston (24; 64) dans une direction de freinage à l'encontre d'une force de poussée du premier ressort (23; 63) quand une alimentation en fluide sous pression de la première chambre de pression (22; 62) est commencée, une force de freinage étant générée avec le mouvement du premier piston (24 ; 64) dans la direction de freinage ;
un frein à ressort (12) ayant un deuxième piston (27) installé de façon à se déplacer une direction axiale de la tige (21, 61) et pénétré par la tige (21, 61), une deuxième chambre de pression (25) et un deuxième ressort (26), le deuxième piston (27) étant soumis à l'action de la deuxième chambre de pression (25) et du deuxième ressort (26) enserrant le deuxième piston (27), en déplaçant ainsi le deuxième piston (27) dans la direction de freinage à l'encontre d'une force de poussée du deuxième ressort (26) quand une alimentation en fluide sous pression de la deuxième chambre de pression (25) est arrêtée et une décharge de fluide sous pression de la deuxième chambre de pression (25) est commencée ; **caractérisé en ce que**
une troisième chambre de pression (28) disposée, séparée de la deuxième chambre de pression (25), du côté opposé du deuxième ressort (26) par rapport au deuxième piston (27), le deuxième piston (27) étant soumis à l'action de la troisième chambre de pression (28), en déplaçant ainsi le deuxième piston (27) dans une direction d'anti-freinage, qui est une direction inverse de la direction de freinage, à l'encontre d'une force de poussée du deuxième ressort (26) quand du fluide sous pression délivré à la première chambre de pression (22; 62) est délivré à la troisième chambre de pression (28).

2. Cylindre de frein (1 ; 1') selon la revendication 1, dans lequel la deuxième chambre de pression (25) est disposée le long de la direction circonférentielle sur la circonférence extérieure du deuxième piston (27) et la troisième chambre de pression (28) est disposée le long de la direction circonférentielle sur la circonférence intérieure du deuxième piston (27).

3. Cylindre de frein (1 ; 1') selon la revendication 2, dans lequel le deuxième piston (27) est pourvu d'une paroi cylindrique (29) disposée le long de la direction circonférentielle du deuxième piston (27) et qui dépasse dans la direction de freinage afin d'être formée avec une forme cylindrique, en sectionnant ainsi la deuxième chambre de pression (25) et la troisième chambre de pression (28), et la paroi cylindrique (29) est en contact coulissant avec une partie cylindrique intérieure (30) formée avec une forme tubulaire le long de la direction circonférentielle du deuxième piston (27) à l'intérieur d'un corps principal de cylindre (13) comprenant le frein normal (11 ; 60) et le frein à ressort (12).

4. Cylindre de frein (1 ; 1') selon l'une quelconque des revendications 1 à 3, dans lequel un cache (31) est formé sur le même côté que le deuxième ressort (26) par rapport au deuxième piston (27) afin d'enfermer une extrémité de la tige (21, 61) pénétrant à travers le deuxième piston (27), l'extrémité étant prévue sur le même côté que le deuxième ressort (26) par rapport au deuxième piston (27).

5. Cylindre de frein (1 ; 1') selon l'une quelconque des revendications 1 à 3 qui est pourvu d'un passage de communication (45) afin de relier pour communication la première chambre de pression (22; 62) à la troisième chambre de pression (28), du fluide sous pression délivré à la première chambre de pression (22 ; 62) étant délivré à la troisième chambre de pression (28) par l'intermédiaire du passage de communication (45).

6. Cylindre de frein (1 ; 1') selon la revendication 5 qui est pourvu de manière additionnelle d'un mécanisme d'embrayage (14) dans lequel une alimentation en fluide sous pression de la deuxième chambre de pression (25) est arrêtée et une décharge de fluide sous pression de la deuxième chambre de pression (25) est commencée, en donnant ainsi un état de raccordement destiné à relier la tige (21, 61) au deuxième piston (27) quand le deuxième piston (27) commence à se déplacer par rapport à la tige (21, 61) grâce à une force de poussée du deuxième ressort (26), et en donnant un état sans raccordement afin de libérer le raccordement de la tige (21, 61) au deuxième piston (27) dans un état tel que du fluide sous pression est délivré à la deuxième chambre de pression (25),
le passage de communication (45) étant formé au niveau du mécanisme d'embrayage (14) qui est dans l'état sans raccordement.

7. Frein unitaire (100) grâce auquel un patin de frein (102) est mis en contact avec la roue (201) d'un véhicule afin de freiner la rotation de la roue (201),
le frein unitaire (100) comportant un dispositif de cylindre de frein (1') selon l'une quelconque des revendications 1 à 3 disposé d'une manière telle que la direction de freinage est parallèle à la direction d'arbre de la roue (201) ;
un dispositif d'ajustement (80) installé de façon à avancer et se rétracter librement dans une direction perpendiculaire à la direction de freinage à l'intérieur d'un corps principal de frein (70) et ayant un arbre de support (82) s'étendant perpendiculairement dans la direction d'avancement et de rétraction et la direction de freinage ;
un rouleau (84) installé sur l'arbre de support (82) afin de tourner librement ;
une tige de poussée (61) installée sur le dispositif d'ajustement (80) dans lequel le patin de frein est relié à la partie d'extrémité qui s'étend depuis le corps principal de frein (70) dans la direction d'avancement du dispositif d'ajustement (80) ; et
un coin (65) fixé fermement sur la tige (61),
le coin (65) ayant une surface d'actionnement inclinée qui est inclinée dans la direction de freinage et capable de pousser le rouleau (84) dans la direction d'avancement quand le coin (65) est déplacé dans la direction de freinage.

8. Frein unitaire (100) selon la revendication 7, qui est pourvu de manière additionnelle d'un palier sphérique (86) afin de procurer un support de telle sorte que la tige de poussée (61) peut basculer par rapport au dispositif d'ajustement (80).
